# EUROPEAN PATENT APPLICATION

(11) **EP 4 822 797 A1**
(43) Date of publication of application: **14.10.2026**
(21) Application number: 24900523.2
(22) Date of filing: 27.11.2024
(51) Int. Cl.: H01M 10/052, H01M 4/13, H01M 10/0562

(54) **NEGATIVE ELECTRODE PROTECTIVE FILM FOR SOLID-STATE BATTERY, NEGATIVE ELECTRODE LAYER FOR SOLID-STATE BATTERY, AND SOLID-STATE BATTERY**

(30) Priority: 08.12.2023 JP 2023208052
(71) Applicant: Osaka Soda Co., Ltd., Osaka-shi, Osaka 530-0001 (JP)
(72) Inventor: HAMATANI, Shumpei, Osaka-shi, Osaka 550-0011 (JP); OHKITA, Yuya, Osaka-shi, Osaka 550-0011 (JP)
(74) Representative: Vossius & Partner Patentanwälte Rechtsanwälte mbB
(86) International application number: PCT/JP2024/042032
(87) International publication number: WO 2025/121229

(57) **Abstract**

The present invention aims to provide a protective film that separates a solid electrolyte layer from an active material layer, as a solution to corrosion and degradation of an inorganic solid electrolyte caused when the inorganic solid electrolyte is in contact with a negative electrode active material such as metallic lithium. It has been found that a negative electrode protective film containing at least a polyether copolymer and a lithium salt compound can prevent contact between an inorganic solid electrolyte and a negative electrode active material without reducing ionic conductivity, and that the negative electrode protective film of the present invention does not degrade the inorganic solid electrolyte even when it is in contact with the inorganic solid electrolyte.

## Description

### TECHNICAL FIELD

The present invention relates to a negative electrode protective film for a solid-state battery, a negative electrode layer for a solid-state battery, and a solid-state battery.

### BACKGROUND ART

Lithium-ion secondary batteries are used in various forms and sizes across all industries. The performance of liquid-state lithium-ion secondary batteries, which are currently the most prevalent, is being enhanced through miniaturization and weight reduction in applications such as mobile phones. However, these batteries have problems including a decline in energy density and capacity reduction due to repeated charge-discharge cycles. Furthermore, large-scale lithium-ion batteries mounted on, for example, hybrid vehicles still carry risks such as fires caused by electrolyte leakage. In recent years, material development for all-solid-state lithium-ion batteries has been actively pursued to solve these problems.

Meanwhile, while all-solid-state lithium-ion batteries using no liquid electrolyte are free from worries such as leakage, there is a problem that a sulfide solid electrolyte or an oxide solid electrolyte, as an inorganic solid electrolyte, may degrade when it comes into contact with and reacts with a negative electrode active material such as metallic lithium. In this context, Patent Literature 1 discloses an all-solid-state lithium-ion battery in which 0.1 to 25% by volume of a halide solid electrolyte is added to a sulfide solid electrolyte. The literature describes that the halide solid electrolyte may react with a negative electrode active material to generate a halogen compound such as lithium chloride, thereby forming a coating film on the surface of the negative electrode active material, which can reduce side reactions between the sulfide solid electrolyte and the negative electrode active material, thereby suppressing capacity reduction.

### CITATION LIST

### - Patent Literature

Patent Literature 1: JP 2023-112694 A

### SUMMARY OF INVENTION

### - Technical Problem

The method using a halide solid electrolyte for forming a coating film, as described in Patent Literature 1, does not ensure prevention of contact between a sulfide solid electrolyte and a negative electrode active material, thereby leaving concerns regarding short circuits or degradation as problems.

### - Solution to Problem

The present inventors have conducted extensive studies to solve the problems and found that a negative electrode protective film containing at least a polyether copolymer and a lithium salt compound can prevent contact between an inorganic solid electrolyte and a negative electrode active material, and that the negative electrode protective film of the present invention does not degrade the inorganic solid electrolyte even when it is in contact with the inorganic solid electrolyte. As a result of further extensive studies, the present inventors completed the present invention based on these findings.

Specifically, the present invention provides inventive embodiments having the following features.

Embodiment 1. A negative electrode protective film for a solid-state battery, containing at least:
a polyether copolymer containing at least a structural unit (A) derived from an epoxy compound represented by the following formula (1) and a structural unit (B) derived from ethylene oxide represented by the following formula (2); and
a lithium salt compound,
the polyether copolymer having a composition ratio of 30 to 99 mol% of the structural unit (A) and 1 to 70 mol% of the structural unit (B), 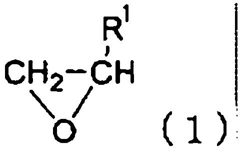 wherein R¹ represents a C1-C12 alkyl group, a cycloalkyl group, or an aryl group,

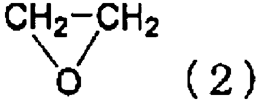

Embodiment 2. The negative electrode protective film for a solid-state battery according to Embodiment 1,
wherein the polyether contains 0.1 to 20 mol% of a structural unit derived from a compound having an ethylenically unsaturated bond represented by the following formula (3): 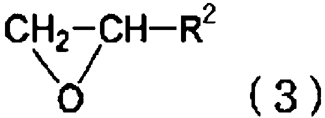 wherein R² represents a group having an ethylenically unsaturated bond.

Embodiment 3. A negative electrode layer for a solid-state battery, including at least: the negative electrode protective film for a solid-state battery according to Embodiment 1 or 2; and a current collector foil.

Embodiment 4. A solid-state battery, including at least: the negative electrode layer for a solid-state battery according to Embodiment 3; a solid electrolyte layer; and a positive electrode layer.

### - Advantageous Effects of Invention

The present invention can prevent contact between an inorganic solid electrolyte and a negative electrode active material. Further, the negative electrode protective film of the present invention does not degrade the inorganic solid electrolyte even when it is in contact with the inorganic solid electrolyte.

### DESCRIPTION OF EMBODIMENTS

### <Negative electrode protective film for solid-state battery>

A negative electrode protective film for a solid-state battery (also referred to simply as negative electrode protective film) according to the present invention has a structure that includes at least a polyether copolymer (also referred to as polyether copolymer of the present invention) containing at least a structural unit derived from an epoxy compound represented by the following formula (1) and a structural unit derived from ethylene oxide represented by the following formula (2); and a lithium salt compound. Such a negative electrode protective film can prevent contact between an inorganic solid electrolyte and a negative electrode active material. Further, the negative electrode protective film of the present invention does not degrade the inorganic solid electrolyte even when it is in contact with the inorganic solid electrolyte.

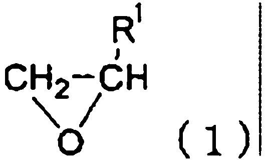

In the formula, R¹ represents a C1-C12 alkyl group, a cycloalkyl group, or an aryl group.

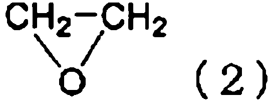

The reason for the advantageous effect provided by the present invention is not clear, but it is presumed to be as follows.

Like other protective films, the negative electrode protective film for a solid-state battery of the present invention, when disposed between an inorganic solid electrolyte and a negative electrode active material, can physically prevent contact between the inorganic solid electrolyte and the negative electrode active material. Meanwhile, when a polymer used in a conventional negative electrode protective film for a solid-state battery is in contact with an inorganic solid electrolyte, a portion of the inorganic solid electrolyte may react and degrade. In contrast, the negative electrode protective film for a solid-state battery of the present invention can prevent contact between the polymer main chain therein and an inorganic solid electrolyte due to the presence of R¹ in the structural unit derived from an epoxy compound represented by formula (1), thereby mitigating or suppressing the degradation of the inorganic solid electrolyte.

### Polyether copolymer

In the structural unit derived from an epoxy compound represented by formula (1), the side chain (R¹ in formula (1)) is preferably, for example, a C1-C12 alkyl group, a cycloalkyl group, or an aryl group, more preferably a C1-C12 alkyl group. The structural unit derived from an epoxy compound represented by formula (1) may be used alone, or two or more thereof may be used.

The number of carbon atoms in the C1-C12 alkyl group is preferably 1 to 10, more preferably 1 to 8, still more preferably 1 to 6, particularly preferably 1 to 4, most preferably 1 to 2.

The alkyl group may be branched or linear. Examples include a methyl group, an ethyl group, an n-propyl group, an isopropyl group, an n-butyl group, a sec-butyl group, and a tert-butyl group. Among these, a methyl group, an ethyl group, an n-propyl group, and an n-butyl group are preferred; a methyl group and an ethyl group are more preferred; and a methyl group is still more preferred.

The number of carbon atoms in the cycloalkyl group is preferably 3 to 12, more preferably 3 to 8, still more preferably 4 to 8.

Examples of the cycloalkyl group include a cyclopropyl group, a cyclobutyl group, a cyclopentyl group, a cyclohexyl group, a cycloheptyl group, a cyclooctyl group, a norbornyl group, and an isobornyl group. Of these, a cyclohexyl group is preferred.

The number of carbon atoms in the aryl group is preferably 6 to 14, more preferably 6 to 12, still more preferably 6 to 10.

Examples of the aryl group include a phenyl group, a tolyl group, a xylyl group, a naphthyl group, and an anthracenyl group. Among these, a phenyl group or a naphthyl group is preferred.

Examples of those having a C1-C12 alkyl group as a side chain include propylene oxide, butylene oxide, 1,2-epoxypentane, 1,2-epoxyhexane, 1,2-epoxyheptane, 1,2-epoxyoctane, 1,2-epoxydecane, and 1,2-epoxydodecane. Among these, propylene oxide, butylene oxide, 1,2-epoxypentane, and 1,2-epoxyhexane are preferred, and propylene oxide or butylene oxide is more preferred. Each of these may be used alone, or two or more thereof may be used.

The lower limit of the amount of structural units derived from epoxy compounds represented by formula (1), based on 100 mol% of the polyether copolymer of the present invention, is preferably 30 mol% or more, more preferably 32 mol% or more, still more preferably 35 mol% or more, particularly preferably 40 mol% or more, while the upper limit is preferably 99 mol% or less, more preferably 90 mol% or less, still more preferably 80 mol% or less, particularly preferably 70 mol% or less, most preferably 60 mol% or less. At an amount within the above range, the inorganic solid electrolyte used may be stable without undergoing a degradation reaction even when the inorganic solid electrolyte is in contact with the negative electrode protective film.

The compound of formula (2) is ethylene oxide. The compound of formula (2) is a basic chemical and is readily commercially available.

The lower limit of the amount of structural units derived from ethylene oxide represented by formula (2), based on 100 mol% of the polyether copolymer of the present invention, is preferably 1 mol% or more, more preferably 10 mol% or more, still more preferably 20 mol% or more, particularly preferably 30 mol% or more, most preferably 40 mol% or more. The upper limit is preferably 70 mol% or less, more preferably 65 mol% or less, still more preferably 60 mol% or less. At an amount within the above range, the negative electrode protective film can ensure the necessary ionic conductivity.

The combined amount of structural units derived from epoxy compounds represented by formula (1) and structural units derived from ethylene oxide represented by formula (2), based on 100 mol% of the polyether copolymer of the present invention, is preferably 31 mol% or more, more preferably 70 mol% or more, still more preferably 80 mol% or more, particularly preferably 90 mol% or more, most preferably 99 mol% or more, and may be 100 mol%.

The polyether copolymer used in the negative electrode protective film of the present invention contains, through a polymerization reaction, the following repeating units (A) and (B):
(A): a repeating unit derived from a monomer of formula (1), 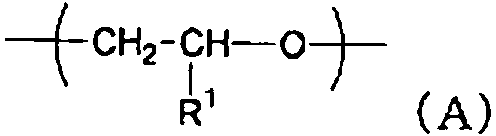 wherein R¹ represents a C1-C12 alkyl group, a cycloalkyl group, or an aryl group and is the same as R¹ in formula (1), and
(B): a repeating unit derived from a monomer of formula (2),

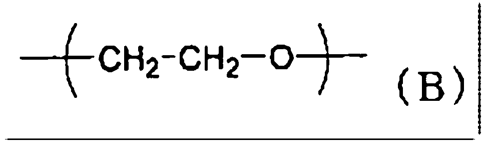

The polyether copolymer may also contain a structural unit derived from a compound having an ethylenically unsaturated bond represented by the following formula (3) as an additional structural unit. The structural unit derived from a compound having an ethylenically unsaturated bond represented by the following formula (3) is crosslinkable due to the presence of an ethylenically unsaturated bond. Thus, R² in formula (3) may be any group that has an ethylenically unsaturated bond. The structural unit derived from a compound having an ethylenically unsaturated bond represented by the following formula (3) may be used alone, or two or more thereof may be used.

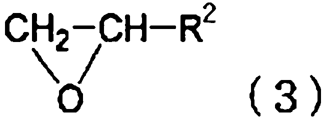

In the formula, R² represents a group having an ethylenically unsaturated bond.

In the structural unit derived from a compound having an ethylenically unsaturated bond represented by formula (3), although R² may be any group that has an ethylenically unsaturated bond, it may be, for example, a hydrocarbon group having a double bond, in particular, a cyclic hydrocarbon group having a double bond, or CH₂=CH-A¹- where A¹ represents a direct bond or a C1-C30 hydrocarbon group optionally containing a heteroatom, such as an alkylene group.

When the polyether copolymer of the present invention contains the structural unit derived from a compound having an ethylenically unsaturated bond represented by formula (3), it has a structure including, in addition to the repeating units (A) and (B),
(C): a repeating unit derived from a monomer of formula (3): 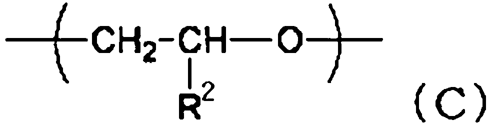 wherein R² represents a group having an ethylenically unsaturated bond and is the same as R² in formula (3).

Examples of the structural unit derived from a compound having an ethylenically unsaturated bond represented by formula (3) include allyl glycidyl ether, 4-vinylcyclohexyl glycidyl ether, α-terpinyl glycidyl ether, cyclohexenylmethyl glycidyl ether, p-vinylbenzyl glycidyl ether, allylphenyl glycidyl ether, vinyl glycidyl ether, 3,4-epoxy-1-butene, 3,4-epoxy-1-pentene, 4,5-epoxy-2-pentene, 1,2-epoxy-5,9-cyclododecadiene, 3,4-epoxy-1-vinylcyclohexene, 1,2-epoxy-5-cyclooctene, glycidyl acrylate, glycidyl methacrylate, glycidyl sorbate, glycidyl cinnamate, glycidyl crotonate, and glycidyl 4-hexenoate. Among these, allyl glycidyl ether, vinyl glycidyl ether, glycidyl acrylate, and glycidyl methacrylate are preferred.

The lower limit of the amount of structural units derived from compounds having an ethylenically unsaturated bond represented by formula (3), based on 100 mol% of the polyether copolymer of the present invention, is preferably 0.1 mol% or more, more preferably 0.5 mol% or more, still more preferably 1 mol% or more, while the upper limit is preferably 20 mol% or less, more preferably 15 mol% or less, still more preferably 10 mol% or less, particularly preferably 5 mol% or less. At an amount within the above range, the polyether copolymer after crosslinking can have higher strength and can easily maintain the morphology as a negative electrode protective film.

The combined amount of structural units derived from epoxy compounds represented by formula (1), structural units derived from ethylene oxide represented by formula (2), and structural units derived from compounds having an ethylenically unsaturated bond represented by formula (3), based on 100 mol% of the polyether copolymer of the present invention, is preferably 31.1 mol% or more, more preferably 75 mol% or more, still more preferably 85 mol% or more, particularly preferably 95 mol% or more, most preferably 99 mol% or more, and may be 100 mol%.

The polymerization composition molar ratio of the polyether copolymer can be determined by calculating the integral values for the respective units using ¹H-NMR and determining the composition from the results.

The type of the polyether copolymer may be either a block copolymer or a random copolymer. It is preferably a random copolymer because it is more effective in reducing the crystallinity of polyethylene oxide.

The lower limit of the weight average molecular weight of the polyether copolymer is preferably 100,000 or more, more preferably 150,000 or more, still more preferably 300,000 or more, while the upper limit of the weight average molecular weight is preferably 3,000,000 or less, more preferably 2,700,000 or less, still more preferably 2,500,000 or less. The molecular weight of the polyether copolymer is measured by gel permeation chromatography (GPC), and the weight average molecular weight is calculated relative to polystyrene standards. Here, N,N-dimethylformamide (DMF) is used as a solvent.

The polyether copolymer of the present invention can be synthesized as follows. The polyether copolymer may be obtained by reacting monomers with stirring in the presence or absence of a solvent at a reaction temperature of 10°C to 120°C using, as a ring-opening polymerization catalyst, either a coordinate anionic initiator, such as an organoaluminum-based catalytic system, an organozinc-based catalytic system, or an organotin-phosphate condensate catalytic system, or an anionic initiator, such as a potassium alkoxide, diphenylmethylpotassium, or potassium hydroxide, each containing K⁺ as a counter ion. From standpoints such as the degree of polymerization or the properties of the resulting copolymer, it is preferred to use a coordinate anionic initiator. In particular, it is particularly preferred to use an organotin-phosphate condensate catalytic system because it is easy to handle.

The lower limit of the amount of polyether copolymers, based on 100 parts by mass of the negative electrode protective film of the present invention, is preferably 35 parts by mass or more, more preferably 40 parts by mass or more, still more preferably 45 parts by mass or more, particularly preferably 50 parts by mass or more, while the upper limit is preferably 95 parts by mass or less, more preferably 90 parts by mass or less, still more preferably 85 parts by mass or less, particularly preferably 80 parts by mass or less. An amount within the above range is preferable because then the negative electrode protective film can keep sufficient strength, thereby suppressing penetration by dendrite precipitates.

The negative electrode protective film of the present invention may contain a polyether copolymer other than the polyether copolymer of the present invention. The lower limit of the amount of polyether copolymers of the present invention, based on 100 parts by mass of the amount of polyether copolymers in the negative electrode protective film of the present invention, is preferably 85 parts by mass or more, more preferably 90 parts by mass or more, still more preferably 95 parts by mass or more, particularly preferably 98 parts by mass or more, and may be 100 parts by mass.

### Lithium salt compound

The lithium salt compound contained in the negative electrode protective film of the present invention may be a lithium salt compound having a wide potential window, such as those commonly used in lithium-ion batteries. Non-limiting examples include LiBF₄, LiPF₆, LiClO₄, LiCF₃SO₃, LiN(FSO₂)₂, LiN(CF₃SO₂)₂, LiN(C₂F₅SO₂)₂, and LiN[CF₃SC(C₂F₅SO₂)₃]₂. Each of these may be used alone, or a mixture of two or more thereof may be used.

The lower limit of the amount of lithium salt compounds, based on 100 parts by mass of the negative electrode protective film of the present invention, is preferably 5 parts by mass or more, more preferably 15 parts by mass or more, still more preferably 20 parts by mass or more, while the upper limit is preferably 50 parts by mass or less, more preferably 40 parts by mass or less, still more preferably 35 parts by mass or less. If the amount is small, sufficient ionic conductivity may not be ensured, thereby adversely affecting the cycle characteristics of the resulting solid-state battery. Also, if the amount is too large, the mechanical strength of the negative electrode protective film may decrease, causing dendrite precipitation and therefore concerns regarding short circuits.

The lower limit of the combined amount of polyether copolymers and lithium salt compounds, based on 100 parts by mass of the negative electrode protective film of the present invention, is preferably 70 parts by mass or more, more preferably 80 parts by mass or more, still more preferably 90 parts by mass or more, particularly preferably 98 parts by mass or more, and may be 100 parts by mass.

### Method for forming negative electrode protective film

The negative electrode protective film can be formed by any method. An arbitrary negative electrode protective film may be formed by subjecting a composition containing a polyether copolymer and a lithium salt compound (a solid-state battery negative electrode protective film composition) to either a wet forming method, such as a doctor blade method, a silk-screen method, or a spray coating method, or a dry forming method, such as compression pressing using a die or roll pressing, depending on the target film thickness. Moreover, when the solid-state battery negative electrode protective film composition has high viscosity, it may be dissolved in a solvent such as water or an organic solvent to prepare a solution, which may then be applied as described above and then dried to form a negative electrode protective film. The drying of the solvent after the application may be carried out using a heater, hot air drying, infrared irradiation, vacuum drying, or other drying equipment. Excess solvent can be removed by drying, for example, at 50°C to 150°C, particularly at 80°C, under normal pressure or in a vacuum.

The solvent used to dissolve the polyether copolymer and the lithium salt compound may be any solvent that can dissolve the polyether copolymer. For example, the solvent may be selected from water, alcohols, acetone, acetonitrile, methyl ethyl ketone, tetrahydrofuran, and N-methyl-2-pyrrolidone. Each of these solvents may be used alone, or a mixture of two or more thereof may be used.

Although the polyether copolymer concentration in the solution is not limited, it is preferably 0.05 to 30% by weight, more preferably 0.1 to 20% by weight.

The lower limit of the thickness of the negative electrode protective film for a solid-state battery of the present invention is preferably 0.5 µm or more, more preferably 0.75 µm or more, still more preferably 1 µm or more, while the upper limit is preferably 100 µm or less, more preferably 80 µm or less, still more preferably 60 µm or less. A protective film having a thickness of less than the lower limit may not exhibit its effect, while a film having a thickness of more than the upper limit may act as a resistor.

When the polyether copolymer of the present invention contains a structural unit derived from a compound having an ethylenically unsaturated bond represented by formula (3), a negative electrode protective film formed therefrom may be crosslinked by heating or irradiation with active energy rays such as ultraviolet rays into a crosslinked product, desirably using a photoinitiator or a thermal polymerization initiator. A crosslinking aid may be added, if necessary.

Examples of photoinitiators usable in the present invention include alkylphenone photoinitiators, benzophenone photoinitiators, acylphosphine oxide photoinitiators, titanocenes, triazines, bisimidazoles, and oxime esters. Alkylphenone photoinitiators, benzophenone photoinitiators, and acylphosphine oxide photoinitiators are preferred. A combination of two or more of the aforementioned compounds may be used as a photoinitiator.

Examples of thermal polymerization initiators usable in the present invention include radical initiators selected from organic peroxide thermal polymerization initiators, azo compound thermal polymerization initiators, and other thermal polymerization initiators. Preferred organic peroxide thermal polymerization initiators include ketone peroxides, peroxyketals, hydroperoxides, dialkyl peroxides, diacyl peroxides, and peroxy esters. Preferred azo compound thermal polymerization initiators include azonitrile compounds, azoamide compounds, and azoamidine compounds. More preferred are organic peroxide initiators. Two or more of these compounds can also be used in combination.

The amount of photoinitiators or thermal polymerization initiators used in the present invention is preferably within the range of 0.1 to 10 parts by mass, more preferably 0.1 to 4.0 parts by mass, relative to 100 parts by mass of the polyether copolymer.

In the present invention, a crosslinking aid may be used together with a photoinitiator or thermal polymerization initiator. A crosslinking aid is usually a polyfunctional compound (for example, a compound containing at least two selected from CH₂=CH-, CH₂=CH-CH₂-, and CF₂=CF-).

The amount of crosslinking aids used in the present invention is preferably within the range of 0.1 to 30 parts by mass, more preferably 0.5 to 20 parts by mass, relative to 100 parts by mass of the polyether copolymer.

Examples of the active energy rays used to crosslink the polyether copolymer used in the present invention include ultraviolet rays, visible light, and electron beams. Of these, ultraviolet rays are preferred, particularly due to the cost of the device and the ease of control.

### <Negative electrode layer for solid-state battery>

A negative electrode layer for a solid-state battery according to the present invention includes at least the negative electrode protective film for a solid-state battery of the present invention and a current collector foil.

### Current collector foil

The current collector foil used in the present invention may include a lithium metal layer formed thereon by charging. The current collector foil on which a lithium metal layer is formed may be any current collector foil that does not react with lithium, and examples include metals, carbons, and conductive polymers, with metals being suitable. Typical examples of the metals usable for the current collector foil include aluminum, platinum, nickel, tantalum, titanium, stainless steel, copper, and other alloys. Among these, metal foils such as copper foils are suitable in terms of conductivity and voltage resistance.

The thickness of the current collector foil is not limited. For example, the thickness may be about 5 to 50 µm, preferably about 10 to 20 µm.

### Negative electrode active material

The negative electrode layer for a solid-state battery of the present invention may contain a negative electrode active material, if necessary. Carbon materials having a structure (porous structure) capable of occluding and releasing lithium ions, such as natural graphite, artificial graphite, and amorphous carbon, and silicon compounds are usable. The particle size is preferably 10 nm or more and 100 µm or less, more preferably 20 nm or more and 20 µm or less.

Examples of the carbon materials include graphite, low-crystalline carbons (soft carbon, hard carbon), carbon blacks (e.g., Ketjenblack, acetylene black, channel black, lamp black, oil furnace black, thermal black), fullerene, carbon nanotubes, carbon nanofibers, carbon nanohorns, carbon fibrils, cokes, mesocarbon microbeads (MCMBs), mesophase pitch carbon fibers, fired phenolic resins, and polyacrylonitrile carbon fibers, with graphite being preferred.

Examples of the silicon compounds include a Si element, Si alloys, Si-containing oxides, and Si-containing carbides, including Si, SiB₄, SiB₆, Mg₂Si, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOₓ (0 < x ≤ 2), SnSiOₓ, and LiSiO. Preferred is SiOₓ (0 <x ≤ 2), such as silicon monoxide (SiO).

Moreover, for use in a lithium-ion battery that utilizes the dissolution and deposition of lithium, metallic lithium, lithium alloys capable of occluding and releasing lithium, and the like can be used.

Examples of the lithium alloys include lithium-aluminum alloys, lithium-tin alloys, lithium-indium alloys, lithium-silver alloys, lithium-gold alloys, lithium-zinc alloys, lithium-germanium alloys, and lithium-silicon alloys. Any other element that can be alloyed with lithium using a known alloying method can be used.

When a carbon material or a silicon compound is used as a negative electrode active material, each may be used alone, or they may be used in combination. When a carbon material and a silicon compound are used in combination, they are preferably contained as described below.

The lower limit of the amount of the carbon material based on the total amount (100% by mass) of the negative electrode active material is preferably 20% by mass or more, more preferably 40% by mass or more, particularly preferably 60% by mass or more, and may be 70% by mass or more. The upper limit is preferably 99% by mass or less, more preferably 98% by mass or less, particularly preferably 96% by mass or less.

The lower limit of the amount of the silicon compound based on the total amount (100% by mass) of the negative electrode active material is preferably 1% by mass or more, more preferably 2% by mass or more, particularly preferably 4% by mass or more. The upper limit is preferably 80% by mass or less, more preferably 60% by mass or less, particularly preferably 40% by mass or less, and may be 30% by mass or less.

When a conductive auxiliary agent is used, it may be a known conductive auxiliary agent. Examples include graphite, conductive carbon blacks such as furnace black, acetylene black, and Ketjenblack, carbon fibers such as carbon nanotubes (CNTs), and metal powders. One or two or more of these conductive auxiliary agents may be used.

When a conductive auxiliary agent is used, the amount of the conductive auxiliary agent relative to 100 parts by mass of the negative electrode active material is not limited, but it may be preferably 20 parts by mass or less, more preferably 15 parts by mass or less. The lower limit of the amount of the conductive auxiliary agent may usually be 0.05 parts by mass or more, 0.1 parts by mass or more, 0.2 parts by mass or more, or 0.5 parts by mass or more.

### Method for producing negative electrode layer for solid-state battery

The negative electrode layer for a solid-state battery of the present invention can be obtained by stacking the negative electrode protective film for a solid-state battery of the present invention onto a current collector foil and attaching them together, as described above.

The negative electrode layer for a solid-state battery can be produced by any method, including common methods. Examples include a method in which a negative electrode protective layer prepared in advance is attached to a current collector foil, as described above, and a method in which a solid-state battery negative electrode protective film composition is uniformly applied to the surface of a current collector to an appropriate thickness by a doctor blade method, an applicator method, a silk-screen method, or another method.

When attaching a negative electrode protective layer prepared in advance, press molding may be performed using a press machine to produce a negative electrode layer for a solid-state battery.

For example, in the doctor blade method, after a solid-state battery negative electrode protective film composition is applied to a current collector foil, the composition is leveled to an appropriate thickness using a blade with a predetermined slit width. The applied composition is dried, for example, by hot air at 100°C or under vacuum at 80°C. The dried composition is press-molded using a press machine to produce a negative electrode layer for a solid-state battery. Heat treatment may be performed again after the pressing to remove excess components.

### <Solid-state battery>

A solid-state battery according to the present invention is characterized by including the negative electrode layer for a solid-state battery of the present invention, a positive electrode layer as a counter electrode, and an inorganic solid electrolyte layer.

### <Positive electrode layer>

The positive electrode layer in the solid-state battery of the present invention includes at least a current collector and a positive electrode active material.

### Positive electrode

The positive electrode used in the present invention may be a known current collector. Specific examples of the positive electrode include metals such as aluminum, nickel, stainless steel, gold, platinum, and titanium.

### Positive electrode active material

The positive electrode active material used in the solid-state battery of the present invention is an alkali metal-containing composite oxide having any of the following compositions: AMO₂, AM₂O₄, A₂MO₃, and AMBO₄, where A represents an alkali metal; M represents a single or two or more transition metals optionally partially containing a non-transition metal; and B represents P, Si, or a mixture thereof. Here, the positive electrode active material is preferably a powder, and the particle size of the powder is preferably 50 microns or less, more preferably 20 microns or less. Such a positive electrode active material has an electromotive force of 3 V (vs. Li/Li⁺) or more.

Specific preferred examples of the positive electrode active material used in the solid-state battery include lithium-containing composite oxides, such as LiₓCoO₂, LiₓNiO₂, LiₓMnO₂, LiₓCrO₂, LiₓFeO₂, LiₓCoₐMn₁₋ₐO₂, LiₓCoₐNi₁₋ₐO₂, LiₓCoₐCr₁₋ₐO₂, LiₓCoₐFe₁₋ₐO₂, LiₓCoₐTi₁₋ₐO₂, LiₓMnₐNi₁₋ₐO₂, LiₓMnₐCr₁₋ₐO₂, LiₓMnₐFe₁₋ₐO₂, LiₓMnₐTi₁₋ₐO₂, LiₓNiₐCr₁₋ₐO₂, LiₓNiₐFe₁₋ₐO₂, LiₓNiₐTi₁₋ₐO₂, LiₓCrₐFe₁₋ₐO₂, LiₓCrₐTi₁₋ₐO₂, LiₓFeₐTi₁₋ₐO₂, LiₓCo_{b}Mn_{c}Ni_{1-b-c}O₂, LiₓNiₐCo_{b}Al_{c}O₂, LiₓCr_{b}Mn_{c}Ni_{1-b-c}O₂, LiₓFe_{b}Mn_{c}Ni_{1-b-c}O₂, LiₓTi_{b}Mn_{c}Ni_{1-b-c}O₂, LiₓMn₂O₄, LiₓMn_{d}Co_{2-d}O₄, LiₓMn_{d}Ni_{2-d}O₄, LiₓMn_{d}Cr_{2-d}O₄, LiₓMn_{d}Fe_{2-d}O₄, LiₓMn_{d}Ti_{2-d}O₄, Li_{y}MnO₃, Li_{y}MnₑCo₁₋ₑO₃, Li_{y}MnₑNi₁₋ₑO₃, Li_{y}MnₑFe₁₋ₑO₃, Li_{y}MnₑTi₁₋ₑO₃, LiₓCoPO₄, LiₓMnPO₄, LiₓNiPO₄, LiₓFePO₄, LiₓCo_{f}Mn_{1-f}PO₄, LiₓCo_{f}Ni_{1-f}PO₄, LiₓCo_{f}Fe_{1-f}PO₄, LiₓMn_{f}Ni_{1-f}PO₄, LiₓMn_{f}Fe_{1-f}PO₄, LiₓNi_{f}Fe_{1-f}PO₄,Li_{y}CoSiO₄, Li_{y}MnSiO₄, Li_{y}NiSiO₄, Li_{y}FeSiO₄, Li_{y}Co_{g}Mn_{1-g}SiO₄, Li_{y}Co_{g}Ni_{1-g}SiO₄, Li_{y}Co_{g}Fe_{1-g}SiO₄, Li_{y}Mn_{g}Ni_{1-g}SiO₄, Li_{y}Mn_{g}Fe_{1-g}SiO₄, Li_{y}Ni_{g}Fe_{1-g}SiO₄, Li_{y}CoPₕSi₁₋ₕO₄, Li_{y}MnPₕSi₁₋ₕO₄, Li_{y}NiPₕSi₁₋ₕO₄, Li_{y}FePₕSi₁₋ₕO₄, Li_{y}Co_{g}Mn_{1-g}PₕSi₁₋ₕO₄, Li_{y}Co_{g}Ni_{1-g}PₕSi₁₋ₕO₄, Li_{y}Co_{g}Fe_{1-g}PₕSi₁₋ₕO₄, Li_{y}Mn_{g}Ni_{1-g}PₕSi₁₋ₕO₄, Li_{y}Mn_{g}Fe_{1-g}PₕSi₁₋ₕO₄, and Li_{y}Ni_{g}Fe_{1-g}PₕSi₁₋ₕO₄, where x = 0.01 to 1.2, y = 0.01 to 2.2, a = 0.01 to 0.99, b = 0.01 to 0.98, c = 0.01 to 0.98, provided that b + c = 0.02 to 0.99, d = 1.49 to 1.99, e = 0.01 to 0.99, f = 0.01 to 0.99, g = 0.01 to 0.99, and h = 0.01 to 0.99.

Further, specific examples of more preferred positive electrode active materials, among the preferred positive electrode active materials usable in the solid-state battery, include LiₓCoO₂, LiₓNiO₂, LiₓMnO₂, LiₓCrO₂, LiₓCoₐNi₁₋ₐO₂, LiₓMnₐNi₁₋ₐO₂, LiₓCo_{b}Mn_{c}Ni_{1-b-c}O₂, LiₓNiₐCo_{b}Al_{c}O₂, LiₓMn₂O₄, Li_{y}MnO₃, Li_{y}MnₑFe₁₋ₑO₃, Li_{y}MnₑTi₁₋ₑO₃, LiₓCoPO₄, LiₓMnPO₄, LiₓNiPO₄, LiₓFePO₄, and LiₓMn_{f}Fe_{1-f}PO₄, where x = 0.01 to 1.2, y = 0.01 to 2.2, a = 0.01 to 0.99, b = 0.01 to 0.98, c = 0.01 to 0.98, provided that b + c = 0.02 to 0.99, d = 1.49 to 1.99, and e = 0.01 to 0.99, f = 0.01 to 0.99, and it should be noted that the values of x and y increase or decrease with charge and discharge.

A binder may be present to improve adhesion between the current collector and the positive electrode active material. Any known binder used for positive electrodes can be used. Specific examples include fluororesins such as polyvinylidene fluoride, vinylidene fluoride-hexafluoropropylene copolymers, perfluoromethyl vinyl ether-tetrafluoroethylene copolymers, polytetrafluoroethylene, and fluororubbers; hydrocarbon elastomers such as styrene-butadiene copolymers and ethylene-propylene copolymers; polysaccharides such as carboxymethyl cellulose, alginic acid, and sodium alginate; and polyimides.

These materials constituting the positive electrode layer may contain an organic solvent or water to prepare a slurry. Any type of water may be used, including commonly used water. Specific examples of such water include tap water, distilled water, ion exchange water, and ultrapure water. Among these, distilled water, ion exchange water, and ultrapure water are preferred.

When the materials constituting the positive electrode are used in the form of a slurry, the solid concentration of the slurry is preferably 10 to 90% by mass, more preferably 20 to 85% by mass, particularly preferably 20 to 80% by mass.

The preparation can be carried out by any method. The materials such as a binder, a conductive auxiliary agent, and water may be dispersed using an ordinary agitator, disperser, kneader, planetary ball mill, homogenizer, or the like. Heating may be performed to increase dispersion efficiency to an extent that does not affect the materials.

### Method for producing positive electrode layer

The positive electrode layer can be produced by any method, including common methods. The positive electrode layer may be produced by uniformly applying the positive electrode materials to the surface of a current collector to an appropriate thickness by a doctor blade method, an applicator method, a silk-screen method, or another method.

For example, in the doctor blade method, after a slurry of the positive electrode materials is applied to a metal electrode substrate, the slurry is leveled to an appropriate thickness using a blade with a predetermined slit width. After the application of the active material, the electrode is dried, for example, by hot air at 100°C or under vacuum at 80°C to remove excess organic solvent or water. The dried electrode is press-molded using a press machine to produce an electrode material. Heat treatment may be performed again after the pressing to remove components such as water, solvents, and emulsifiers.

### <Inorganic solid electrolyte layer>

Examples of the inorganic solid electrolyte layer include oxide solid electrolytes and sulfide solid electrolytes. The inorganic solid electrolyte generally refers to an aggregate of inorganic solid particles constituting an electrolyte.

The oxide solid electrolyte used may be any oxide solid electrolyte that contains oxygen, has ionic conductivity for metals belonging to Group 1 or Group 2 of the periodic table, and exhibits electron-insulating properties.

Specific examples of compounds that may constitute the oxide solid electrolyte include LiₓLa_{y}TiO₃ where x = 0.3 to 0.7, and y = 0.3 to 0.7 (LLT); LiₓLa_{y}Zr_{z}MₘOₙ where M represents at least one element selected from Al, Mg, Ca, Sr, V, Nb, Ta, Ti, Ge, In, and Sn, x satisfies 5 ≤ x ≤ 10, y satisfies 1 ≤ y ≤ 4, z satisfies 1 ≤ z ≤ 4, m satisfies 0 ≤ m ≤ 2, and n satisfies 5 ≤ n ≤ 20; LiₓB_{y}M_{z}Oₙ where M represents at least one element selected from C, S, Al, Si, Ga, Ge, In, and Sn, x satisfies 0 ≤ x ≤ 5, y satisfies 0 ≤ y ≤ 1, z satisfies 0 ≤ z ≤ 1, and n satisfies 0 ≤ n ≤ 6; Liₓ(Al, Ga)_{y}(Ti, Ge)_{z}SiₐPₘOₙ where 1 ≤ x ≤ 3, 0 ≤ y ≤ 1, 0 ≤ z ≤ 2, 0 ≤ a ≤ 1, 1 ≤ m ≤ 7, and 3 ≤ n ≤ 13; Li₍₃₋₂ₓ₎MₓDO where x represents a number that is 0 or more and 0.1 or less, M represents a divalent metal atom, and D represents a halogen atom or a combination of two or more halogen atoms; LiₓSi_{y}O_{z} where 1 ≤ x ≤ 5, 0 < y ≤ 3, and 1 ≤ z ≤ 10; LiₓS_{y}O_{z} where 1 ≤ x ≤ 3, 0 < y ≤ 2, and 1 ≤ z ≤ 10; Li₃BO₃-Li₂SO₄; Li₂O-B₂O₃-P₂O₅; Li₂O-SiO₂; Li₆BaLa₂Ta₂O₁₂; Li₃PO_{(4-3/2w)}N_{w} where w < 1; Li_{3.5}Zn_{0.25}GeO₄ having a lithium super ionic conductor (LISICON)-type crystal structure; La_{0.55}Li_{0.35}TiO₃ having a perovskite-type crystal structure; LiTi₂P₃O₁₂ having a natrium super ionic conductor (NASICON)-type crystal structure; Li_{(1+x+y)}(Al, Ga)ₓ(Ti, Ge)₍₂₋ₓ₎Si_{y}P_{(3-y)}O₁₂ where 0 ≤ x ≤ 1, and 0 ≤ y ≤ 1; and Li₇La₃Zr₂O₁₂ having a garnet-type crystal structure. Phosphorous compounds containing Li, P, and O are also desirable. Examples include lithium phosphate (Li₃PO₄), LiPON obtained by partially replacing oxygen in lithium phosphate with nitrogen, and LiPOD where D represents at least one selected from Ti, V, Cr, Mn, Fe, Co, Ni, Cu, Zr, Nb, Mo, Ru, Ag, Ta, W, Pt, Au, and the like. Also preferred are LiAON and the like, where A represents at least one selected from Si, B, Ge, Al, C, Ga, and the like.

Preferred among these are LiₓLa_{y}TiO₃ where x = 0.3 to 0.7, y = 0.3 to 0.7 (LLT); LiₓLa_{y}Zr_{z}MₘOₙ where M represents at least one element selected from Al, Mg, Ca, Sr, V, Nb, Ta, Ti, Ge, In, and Sn, x satisfies 5 ≤ x ≤ 10, y satisfies 1 ≤ y ≤ 4, z satisfies 1 ≤ z ≤ 4, m satisfies 0 ≤ m ≤ 2, and n satisfies 5 ≤ n ≤ 20; Li₇La₃Zr₂O₁₂ (LLZ); Li₃BO₃; Li₃BO₃-Li₂SO₄; Li₃BO₃-Li₂CO₃; and Liₓ(Al, Ga)_{y}(Ti, Ge)_{z}SiₐPₘOₙ where 1 ≤ x ≤ 3, 0 ≤ y ≤ 1, 0 ≤ z ≤ 2, 0 ≤ a ≤ 1, 1 ≤ m ≤ 7, and 3 ≤ n ≤ 13. Each of these may be used alone, or two or more thereof may be used in combination.

The sulfide solid electrolyte used may be any sulfide solid electrolyte that contains sulfur, has ionic conductivity for metals belonging to Group 1 or Group 2 of the periodic table, and exhibits electron-insulating properties. Examples include lithium-ion-conductive solid electrolytes that satisfy the composition represented by the following formula.

LiₐM_{b}P_{c}S_{d}Aₑ

In the formula, M represents an element selected from B, Zn, Sn, Si, Cu, Ga, Sb, Al, and Ge, with B, Sn, Si, Al, or Ge being preferred, with Sn, Al, or Ge being more preferred; A represents I, Br, Cl, or F, preferably I or Br, particularly preferably I; a to e each represent a composition ratio of each element, a:b:c:d:e satisfies 1 to 12:0 to 1:1:2 to 12:0 to 5, and further a is preferably 1 to 9, more preferably 1.5 to 4, b is preferably 0 to 0.5, d is preferably 3 to 7, more preferably 3.25 to 4.5, and e is preferably 0 to 3, more preferably 0 to 2.

Regarding the composition ratio of Li, M, P, S, and A in the formula, preferably b, e = 0, more preferably b = 0, e = 0, and the ratio of a, c, and d (a:c:d) = 1 to 9:1:3 to 7, still more preferably b = 0, e = 0, and a:c:d = 1.5 to 4:1:3.25 to 4.5.

In the case of the inorganic solid electrolyte in the form of particles, the particle size thereof is, for example, 0.01 to 100 µm, preferably 0.1 to 20 µm.

A binder may be present to improve adhesion between the inorganic solid particles. A known binder can be used. Specific examples include fluororesin binders such as polyvinylidene fluoride, vinylidene fluoride-hexafluoropropylene copolymers, perfluoromethyl vinyl ether-tetrafluoroethylene copolymers, and polytetrafluoroethylene; rubber binders such as fluororubbers, styrene-butadiene rubbers, and ethylene-propylene rubbers; polysaccharides such as carboxymethyl cellulose, alginic acid, and sodium alginate; and polyimides.

### Method for producing inorganic solid electrolyte layer

The inorganic solid electrolyte layer can be produced by any method, including common methods. The inorganic solid electrolyte layer may be obtained by preparing pellets of inorganic solid particles, and then molding the pellets into a desired shape using an apparatus such as a press molding machine. Alternatively, the inorganic solid electrolyte layer may be obtained by dispersing inorganic solid particles in a medium such as water or an organic solvent to prepare a slurry solution, and uniformly applying the slurry solution to an appropriate thickness by a method such as a doctor blade method, an applicator method, or a silk-screen method.

With regard to the water or organic solvent used to prepare a slurry solution, any type of water may be used, including commonly used water. Specific examples of such water include tap water, distilled water, ion exchange water, and ultrapure water. Among these, distilled water, ion exchange water, and ultrapure water are preferred. Moreover, examples of the organic solvent include alcohols, acetone, acetonitrile, methyl ethyl ketone, toluene, tetrahydrofuran, and N-methyl-2-pyrrolidone.

The solid concentration in the slurry is preferably 10 to 90% by mass, more preferably 20 to 85% by mass, particularly preferably 20 to 80% by mass.

The preparation can be carried out by any method. The materials such as a binder, a conductive auxiliary agent, and water may be dispersed using an ordinary agitator, disperser, kneader, planetary ball mill, homogenizer, or the like. Heating may be performed to increase dispersion efficiency to an extent that does not affect the materials.

### Method for producing solid-state battery

The solid-state battery of the present invention can be produced by any method. It may be produced by a known method with a positive electrode layer, a negative electrode layer for a solid-state battery, and an inorganic solid electrolyte layer. For example, a coin-type solid-state battery may be obtained by sequentially forming and stacking a positive electrode layer, an inorganic solid electrolyte layer, and a negative electrode layer in an outer can, followed by pressure bonding under a high confining pressure. Non-limiting examples of the shape of the solid-state battery include coin, cylindrical, and sheet shapes.

### EXAMPLES

The present invention will be specifically described below with reference to, but not limited to, examples.

### [Synthesis Example] (Production of polymerization catalyst)

A three-necked flask equipped with a stirrer, a thermometer, and a distillation apparatus was charged with 10 parts by mass of tributyltin chloride and 35 parts by mass of tributyl phosphate, and they were heated at 250°C for 20 minutes with stirring under a nitrogen stream to remove distillates, thereby obtaining a solid condensed substance as a residue. This substance was used as a polymerization catalyst in the following polymerization examples.

### [Polymerization Example 1] (Production of polyether copolymer 1)

The interior of a four-necked glass flask with a 3 L capacity was purged with nitrogen, and the flask was charged with 3.3 parts by mass of the polymerization catalyst produced in the synthesis example, 58 parts by mass of ethylene oxide, 190 parts by mass of propylene oxide, 0.4 parts by mass of tert-butanol, and 1000 parts by mass of n-hexane as a solvent. While monitoring the degree of polymerization by gas chromatography, 86 parts by mass of ethylene oxide was added successively. Then, a reaction was performed at a polymerization temperature of 20°C for 10 hours. The polymerization reaction was terminated by adding methanol. A polyether copolymer 1 was taken out by decantation, then dried at 25°C under normal pressure for 24 hours, and further dried at 40°C under reduced pressure for 10 hours to obtain 317 parts by mass of the polyether copolymer 1. The weight average molecular weight and copolymerization composition of the polyether copolymer 1 were measured as described below. Table 1 shows the results. It was a copolymer of ethylene oxide and propylene oxide and had a weight average molecular weight of 760,000.

### [Weight average molecular weight of polyether copolymer]

The weight average molecular weight was measured by gel permeation chromatography (GPC) and calculated relative to polystyrene standards. The GPC measurement was carried out at 60°C using RID-6A available from Shimadzu Corporation, Shodex KD-807, KD-806, KD-806M, and KD-803 columns available from Showa Denko K.K., and DMF as a solvent.

### [Copolymerization composition of polyether copolymer]

The polyether copolymer was dissolved in deuterochloroform. The integral values of the units were determined by 1H-NMR, and the composition ratio was determined from the calculation results. The apparatus used was model JNM ECZS-400 available from Jeol Ltd.

### [Polymerization Example 2] (Production of polyether copolymer 2)

The interior of a four-necked glass flask with a 3 L capacity was purged with nitrogen, and the flask was charged with 3.3 parts by mass of the polymerization catalyst produced in the synthesis example, 56 parts by mass of ethylene oxide adjusted to have a moisture content of 10 ppm or less, 179 parts by mass of propylene oxide, 18 parts by mass of allyl glycidyl ether, 0.4 parts by mass of tert-butanol, and 1000 parts by mass of n-hexane as a solvent. While monitoring the degree of polymerization by gas chromatography, 80 parts by mass of ethylene oxide was added successively. Then, a reaction was performed at a polymerization temperature of 20°C for 10 hours. The polymerization reaction was terminated by adding methanol. A polyether copolymer 2 was taken out by decantation, then dried at 25°C under normal pressure for 24 hours, and further dried at 40°C under reduced pressure for 10 hours to obtain 317 parts by mass of the polyether copolymer 2. The polyether copolymer 2 was tested as described above. The obtained polymer was a copolymer of ethylene oxide, propylene oxide, and allyl glycidyl ether and had a weight average molecular weight of 1,370,000.

### [Polymerization Example 3] (Production of polyether copolymer 3)

The interior of a four-necked glass flask with a 3 L capacity was purged with nitrogen, and the flask was charged with 3.3 parts by mass of the polymerization catalyst produced in the synthesis example, 56 parts by mass of ethylene oxide adjusted to have a moisture content of 10 ppm or less, 197 parts by mass of butylene oxide, 16 parts by mass of allyl glycidyl ether, 0.7 parts by mass of tert-butanol, and 1000 parts by mass of n-hexane as a solvent. While monitoring the degree of polymerization by gas chromatography, 64 parts by mass of ethylene oxide was added successively. Then, a reaction was performed at a polymerization temperature of 28°C for eight hours. The polymerization reaction was terminated by adding methanol. A polyether copolymer 3 was taken out by decantation, then dried at 25°C under normal pressure for 24 hours, and further dried at 40°C under reduced pressure for 10 hours to obtain 300 parts by mass of the polyether copolymer 3. The polyether copolymer 3 was tested as described above. The obtained polymer was a copolymer of ethylene oxide, butylene oxide, and allyl glycidyl ether and had a weight average molecular weight of 1,020,000.

### [Polymerization Example 4] (Production of polyether copolymer 4)

The interior of a four-necked glass flask with a 3 L capacity was purged with nitrogen, and the flask was charged with 3.3 parts by mass of the polymerization catalyst, 106 parts by mass of ethylene oxide, 120 parts by mass of propylene oxide, 0.4 parts by mass of tert-butanol, and 1000 parts by mass of n-hexane as a solvent. While monitoring the degree of polymerization by gas chromatography, 107 parts by mass of ethylene oxide was added successively. Then, a reaction was performed at a polymerization temperature of 20°C for 10 hours. The polymerization reaction was terminated by adding methanol. A polyether copolymer 4 was taken out by decantation, then dried at 25°C under normal pressure for 24 hours, and further dried at 40°C under reduced pressure for 10 hours to obtain 317 parts by mass of the polyether copolymer 3. The polyether copolymer 4 was a copolymer of ethylene oxide and propylene oxide and had a weight average molecular weight of 610,000.

### [Polymerization Example 5] (Production of polyether copolymer 5)

The interior of a four-necked glass flask with a 3 L capacity was purged with nitrogen, and the flask was charged with 2.5 parts by mass of the polymerization catalyst, 87 parts by mass of ethylene oxide, 32 parts by mass of propylene oxide, and 1000 parts by mass of n-hexane as a solvent. While monitoring the degree of polymerization by gas chromatography, 131 parts by mass of ethylene oxide was added successively. Then, a reaction was performed at a polymerization temperature of 20°C for 10 hours. The polymerization reaction was terminated by adding methanol. A polyether copolymer 5 was taken out by decantation, then dried at 25°C under normal pressure for 24 hours, and further dried at 45°C under reduced pressure for 10 hours to obtain 238 parts by mass of the polyether copolymer 5. The polyether copolymer 4 was a copolymer of ethylene oxide and propylene oxide and had a weight average molecular weight of 4,040,000.

### [Example 1]

A solid-state battery negative electrode protective film composition was prepared by dissolving 74.6 parts by mass of the polyether copolymer 1 obtained in Polymerization Example 1 and 25.4 parts by mass of LiN(FSO₂)₂ as a lithium salt compound in 600 parts by mass of tetrahydrofuran as a dispersion medium. Subsequently, the solid-state battery negative electrode protective film composition was applied onto a PET film to a predetermined thickness and then dried to prepare a negative electrode protective film for a solid-state battery (protective film thickness: 50 µm). Thus, a negative electrode protective film 1 was prepared. The negative electrode protective film for a solid-state battery was evaluated through the following tests.

### [Evaluation of degradation of sulfide solid electrolyte]

A slurry solution containing an argyrodite-type sulfide solid electrolyte (Li₆PS₅Cl available from NEI Corporation) dispersed in toluene and a rubber binder was applied onto a PET film. The dispersion medium was removed by vacuum heat drying to prepare an inorganic solid electrolyte layer. This layer and the negative electrode protective film for a solid-state battery prepared in Example 1 were attached together and subjected to a load of 100 MPa or more using a flat-plate press machine to prepare a composite of the negative electrode protective film and the inorganic solid electrolyte layer having a thickness of 500 to 2000 µm. Subsequently, the composite was subjected to heat treatment at 60°C for one week. Then, ³¹P-NMR analysis was conducted on the inorganic solid electrolyte using a nuclear magnetic resonance apparatus (NMR).

### ³¹P-NMR analysis

The heat-treated composite was ground and mixed thoroughly in a mortar in a glove box under an argon atmosphere. The resulting composite was sealed in a solid-state NMR sample tube (probe diameter: 4.0 mm) and then measured by a single-pulse method using an NMR apparatus (apparatus name: Agilent NMR System 400WB). Separately, the argyrodite-type sulfide solid electrolyte was also subjected to NMR analysis by the same procedure for comparison. Evaluation was made based on the difference between the ratio of the PS₄³⁻ unit-derived spectral component and the P₂S₇⁴⁻ unit-derived spectral component of the argyrodite-type sulfide solid electrolyte before heat treatment and the ratio of the PS₄³⁻ unit-derived spectral component and the P₂S₇⁴⁻ unit-derived spectral component, which was generated through the reaction with the polymer, of the sulfide solid electrolyte after heat treatment. The analysis temperature was 25°C. An 85% aqueous phosphoric acid solution was used as a reference substance with a chemical shift of 0 ppm. Here, the ratio of the PS₄³⁻ unit-derived spectral component and the P₂S₇⁴⁻unit-derived spectral component of the argyrodite-type sulfide solid electrolyte before heat treatment was 96%:4%.
Sample spinning rate: 20 kHz
Number of scans: 16
Relaxation time: 2000 seconds

### [Example 2]

Evaluation was made as described in Example 1, except that the polyether copolymer 1 was changed to the polyether copolymer 2, a solid-state battery negative electrode protective film composition was prepared by dissolving 74.6 parts by mass of the polyether copolymer 2 and 25.4 parts by mass of LiN(FSO₂)₂ in 600 parts by mass of tetrahydrofuran, and a negative electrode protective film 2 for a solid-state battery was prepared from the composition.

### [Example 3]

Evaluation was made as described in Example 1, except that the polyether copolymer 1 was changed to the polyether copolymer 3, a solid-state battery negative electrode protective film composition was prepared by dissolving 74.6 parts by mass of the polyether copolymer 3 and 25.4 parts by mass of LiN(FSO₂)₂ in 600 parts by mass of tetrahydrofuran, and a negative electrode protective film 3 for a solid-state battery was prepared from the composition.

### [Comparative Example 1]

Evaluation was made as described in Example 1, except that the polyether copolymer 1 obtained in Polymerization Example 1 was changed to the polyether copolymer 4, a solid-state battery negative electrode protective film composition was prepared by dissolving 73.5 parts by mass of the polyether copolymer 3 and 26.5 parts by mass of LiN(FSO₂)₂ in 600 parts by mass of tetrahydrofuran, and a negative electrode protective film 4 for a solid-state battery was prepared from the composition.

### [Comparative Example 2]

Evaluation was made as described in Example 1, except that the polyether copolymer 1 obtained in Polymerization Example 1 was changed to the polyether copolymer 5, a solid-state battery negative electrode protective film composition was prepared by dissolving 72.5 parts by mass of the polyether copolymer 4 and 27.5 parts by mass of LiN(FSO₂)₂ in 600 parts by mass of tetrahydrofuran, and a negative electrode protective film 5 for a solid-state battery was prepared from the composition.

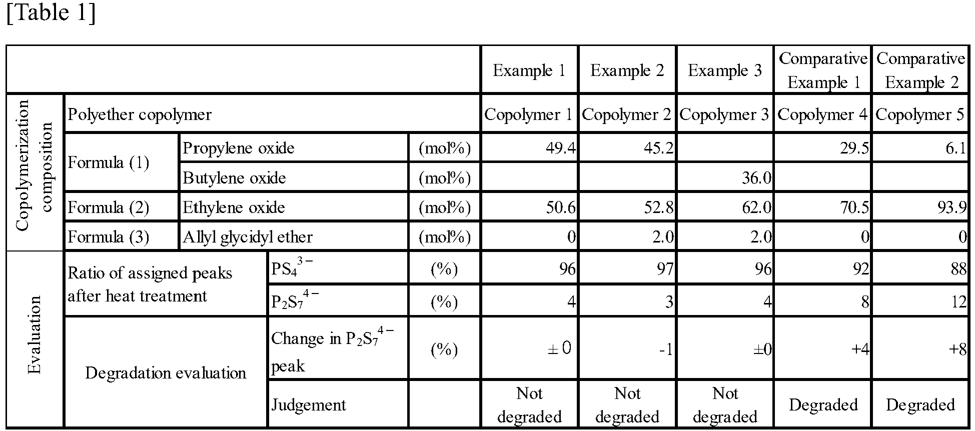

According to the results of the sulfide resistance test of Example 1, Example 2, Comparative Examples 1, and Comparative Example 2, Example 1 and Example 2, each using the negative electrode protective film of the present invention, showed no increase in the peak assigned to P₂S₇4⁻. This demonstrates that the negative electrode protective film of the present invention, which contained at least specific amounts of a polyether copolymer containing a structural unit (A) derived from an epoxy compound represented by formula (1) and a structural unit (B) derived from ethylene oxide represented by formula (2), and a lithium salt compound, suppressed the degradation of the inorganic solid electrolyte and the reaction between the polymer and the sulfide solid electrolyte.

### INDUSTRIAL APPLICABILITY

The inorganic solid electrolyte secondary battery including a polyether electrolyte according to the present invention can function as a negative electrode protective film without degrading the inorganic solid electrolyte, and can be used to prepare a solid electrolyte secondary battery including a negative electrode active material with a high energy density, such as metallic lithium. Moreover, this battery can be suitably used in large-scale battery applications, such as automotive applications including electric vehicles and hybrid electric vehicles, and storage batteries for residential energy storage.

## Claims

1. A negative electrode protective film for a solid-state battery, comprising at least:
a polyether copolymer containing at least a structural unit (A) derived from an epoxy compound represented by the following formula (1) and a structural unit (B) derived from ethylene oxide represented by the following formula (2); and
a lithium salt compound,
the polyether copolymer having a composition ratio of 30 to 99 mol% of the structural unit (A) and 1 to 70 mol% of the structural unit (B), 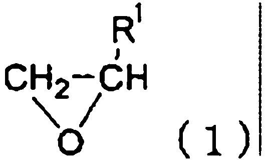 wherein R¹ represents a C1-C12 alkyl group, a cycloalkyl group, or an aryl group,

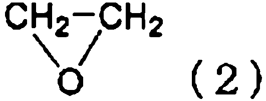

2. The negative electrode protective film for a solid-state battery according to claim 1,
wherein the polyether contains 0.1 to 20 mol% of a structural unit derived from a compound having an ethylenically unsaturated bond represented by the following formula (3): 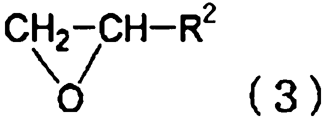 wherein R² represents a group having an ethylenically unsaturated bond.

3. A negative electrode layer for a solid-state battery, comprising at least:
the negative electrode protective film for a solid-state battery according to claim 1 or 2; and
a current collector foil.

4. A solid-state battery, comprising at least:
the negative electrode layer for a solid-state battery according to claim 3;
a solid electrolyte layer; and
a positive electrode layer.
